# EUROPÄISCHE PATENTANMELDUNG

(11) **EP 1 580 112 A1**
(43) Veröffentlichungstag der Anmeldung: **28.09.2005**
(21) Anmeldenummer: 05006198.5
(22) Anmeldetag: 22.03.2005
(51) Int. Cl.: B62M 1/12

(54) **Fahrrad mit einem Lenker und einer zusätzlichen armkraftbetätigten Antriebsvorrichtung**

(30) Priorität: 25.03.2004 DE 102004014559
(71) Anmelder: Quellmalz, Andreas, Dipl.-Ing., Falken Anteil (DE)
(72) Erfinder: Quellmalz, Andreas, Dipl.-Ing., Falken Anteil (DE)
(74) Vertreter: Neumann, Steffen

(57) **Zusammenfassung**

Die Erfindung betrifft ein Fahrrad (1) mit einem Lenker (17) und einer zusätzlichen armkraftbetätigten Antriebsvorrichtung, die im wesentlichen aus zwei gegenläufig schwenkbaren, mit Handgriffen (25) versehenen und auf einer quer zur Längsmittelebene des Fahrrades (1) höhenmäßig über dem Lenker (17) angeordneten Achse (21) eines Trägers (18) in Abstand zueinander gelagerten Armhebeln (26,27) besteht, wobei die Armhebel (26,27) über mindestens ein Pleuel (37) mit mindestens einer Tretkurbel (9) eines am Rahmen (3) von einem Tretlager (7) gehaltenen Fußkurbelantriebs (8) in Wirkverbindung stehen, und wobei der Träger (18) am Lenker (17) und die Achse (21) in Fahrtrichtung hinter dem Lenker (17) angeordnet sind.

## Beschreibung

Die Erfindung betrifft ein Fahrrad mit einem Lenker und einer zusätzlichen armkraftbetätigten Antriebsvorrichtung, die im wesentlichen aus zwei gegenläufig schwenkbaren, mit Handgriffen versehenen und auf einer quer zur Längsmittelebene des Fahrrades höhenmäßig über dem Lenker angeordneten Achse eines Trägers in Abstand zueinander gelagerten Armhebeln besteht, wobei die Armhebel über mindestens ein Pleuel mit mindestens einer Tretkurbel eines am Rahmen von einem Tretlager gehaltenen Fußkurbelantriebs in Wirkverbindung stehen.

Eine derartige armkraftbetätigte Antriebsvorrichtung für ein Fahrrad mit einem Lenker ist aus der DE 695 29 292 T2 bekannt. Dabei ist der Träger für die auf einer Achse erfolgende Lagerung der Armhebel am Rahmen mittels Befestigungsschellen angebracht, wobei die Achse für die Armhebel in Fahrtrichtung vor dem Lenker angeordnet ist. Außerdem sind beide Armhebel mit je einem Pleuel verbunden, wobei jedes dieser seitlich des Rahmens verlaufenden Pleuel mit der an den Tretkurbeln vorgesehenen Achse für ein Pedal befestigt ist. Diesen am Rahmen von einem Tretlager gehaltenen Tretkurbeln mit Pedalen (Fußkurbelantrieb) ist ein Kettenrad zugeordnet, über welches in Verbindung mit einer Kette ein dem Hinterrad des Fahrrades zugeordnetes Antriebsritzel in Wirkverbindung steht, so dass der Antrieb des Fahrrades durch die Bein- und/oder die Armkraft erfolgen kann.
Nachteilig wirkt sich bei der Lösung nach DE 695 29 292 T2 aus, dass durch die Anordnung des die Armhebel lagernden Trägers am Rahmen, das Fahrrad praktisch lenkunfähig ist, weil keine Verbindung zu der im Lenkkopf gelagerten, das Vorderrad tragenden Gabel bzw. des mit der Gabel drehfest verbundenen Lenkers gegeben ist. Dies bedingt, dass insbesondere bei erforderlicher Kurvenfahrt die Griffe der Armhebel vom Fahrer losgelassen und nachfolgend der Lenker des Fahrrades ergriffen werden muss. Außerdem ist das Betreiben der lenkerferner armkraftbetätigten Antriebsvorrichtung nur in relativ aufrechter Körperhaltung möglich, da die Schwenkbewegung der Armhebel im Wesentlichen gegenüber einer senkrecht stehenden Ebene erfolgt, wodurch der aus der zusätzlich eingeleiteten Armkraft resultierende Antriebszugewinn vom erhöhten Luftwiderstand der aufgerichteten Fahrers weitgehend kompensiert wird. Damit kann die armkraftbetriebene Antriebsvorrichtung auch nicht in einer für das Radfahren üblichen Körperhaltung betätigt werden, so dass nur eine ungenügende Rücksicht auf die Ergonomie und die in Verbindung mit der Einleitung der Beinkraft stehenden Bewegungsabläufe nehmbar ist. Auch unter diesen Gesichtspunkten ist die Ausnutzung der Körperkräfte uneffektiv.

Eine weitere, nicht gattungsgemäße armkraftbetätigte Antriebsvorrichtung ist aus der DE 199 61 176 C2 ersichtlich. Diese verzichtet vollständig auf einen Lenker, wobei dessen Funktion mit einem hohen technischen Aufwand durch an jeden der Handgriffe vorgesehene und auf die Gabel des Fahrrades einwirkende Bowdenzüge mit oder ohne Seilscheiben, biegeweiche Elemente oder hydraulische Systeme realisiert wird. Weiterhin wirkt nur ein Pleuel auf die eine der Tretkurbeln des Fußkurbelantrieb ein, wobei die Übertragung der Bewegung der Armhebel auf den Pleuel durch ein aufwendiges Kegelradgetriebe erfolgt.

Nicht unter die Gattung der Erfindung fallen auch die weiterhin bekannten Lösungen nach der CH 135 368 A und der DE 93 198 A. Dabei beinhaltet die CH 135 368 A weder einen Lenker noch einen Lenkervorbau, sondern nur ein Lenkrohr. Demgegenüber ist aus der DE 93 198 A eine erste Lösung ersichtlich, bei der zwar als Lenker wirkende Armhebel vorgesehen sind, welche aber nur gemeinsam um die Achse schwingen können. Außerdem wird die eingeleitete Bewegung über die Stange nicht auf die Tretkurbeln, sondern auf das auf der Achse Tretkurbellagers befindliche Kettenrad übertragen. Die in der DE 93 198 A offenbarte zweite Lösungsvariante weist zwar gegenläufig schwenkbare Armhebel auf, wobei jedoch die Bewegung über eine Kette oder alternativ durch die Stange auf das Tretkurbellager bzw. dessen Kettenrad, aber wiederum nicht auf die Tretkurbeln selbst, weitergeleitet wird. Nachteilig ist bei diesen Lösungen außerdem, dass sich die Achse für die Armhebel in Fahrtrichtung vor dem Lenkrohr/der Lenkachse bzw. den als Lenker wirkenden Armhebeln befindet, so dass das Betreiben der armkraftbetätigten Antriebsvorrichtung nur in relativ aufrechter Körperhaltung möglich ist, wodurch mit Bezug auf die o. g. DE 695 29 292 T2 analoge Nachteile zur Geltung kommen.

Aufgabe der Erfindung ist es, eine Lösung vorzuschlagen, mit der die Lenkfähigkeit des Fahrrades auch während der Nutzung der armkraftbetätigten Antriebsvorrichtung gewährleistet und deren Betreiben ergonomisch günstig, in für das Radfahren nahezu üblicher Körperhaltung erfolgen kann, wobei weiterhin die in Verbindung mit der Einleitung der Beinkraft stehenden Bewegungsabläufe besser berücksichtigt und die Ausnutzung der aus der Bein- und Armarbeit resultierenden Körperkräfte optimaler nutzbar gemacht werden können.

Erfindungsgemäß wird diese Aufgabe bei einer gattungsgemäßen armkraftbetätigten Antriebsvorrichtung mit den Merkmalen des Patentanspruchs 1 gelöst.

Die Vorteile der Erfindung bestehen darin, dass die Lenkfähigkeit des Fahrrades auch beim Betrieb der armkraftbetätigten Antriebsvorrichtung uneingeschränkt abgesichert ist, so dass auf ein die Einleitung der Armkraft auf den Fußkurbelantrieb unterbrechendes Loslassen der mit den Armhebeln verbunden Griffe durch den Fahrer und das nachfolgende Ergreifen des Lenkers zur Realisierung einer Kurvenfahrt verzichtet werden kann. Weiterhin wird durch die lenkernahe Anordnung der armkraftbetätigten Antriebsvorrichtung in Verbindung mit der in Fahrtrichtung hinter dem Lenker angeordneten Achse für die Armhebel ermöglicht, dass diese Vorrichtung in einer beim Radfahren üblichen Körperhaltung betrieben werden kann, bei der auch die ohnehin stattfindenden Körperbewegungen und -spannungen optimal in die abwechselnd erfolgende Beugung und Streckung der an den Armhebeln der Antriebsvorrichtung festgelegten Arme des Fahrers einbeziehbar sind. Daraus resultiert eine Verbesserung der ergonomischen Bedingungen, wobei auch die Ausnutzung der aus der Bein- und Armarbeit resultierenden Körperkräfte gesteigert wird.

Vorteilhafte Weiterbildungen der Erfindung sind aus Patentansprüchen 2 bis 14 ersichtlich.

Die Erfindung soll nachstehend an einem Ausführungsbeispiel und zugehörigen Zeichnungen näher erläutert werden.

Es zeigen:
- Fig. 1: eine Seitenansicht eines Fahrrades mit der erfindungsgemäßen armkraftbetätigten Antriebsvorrichtung

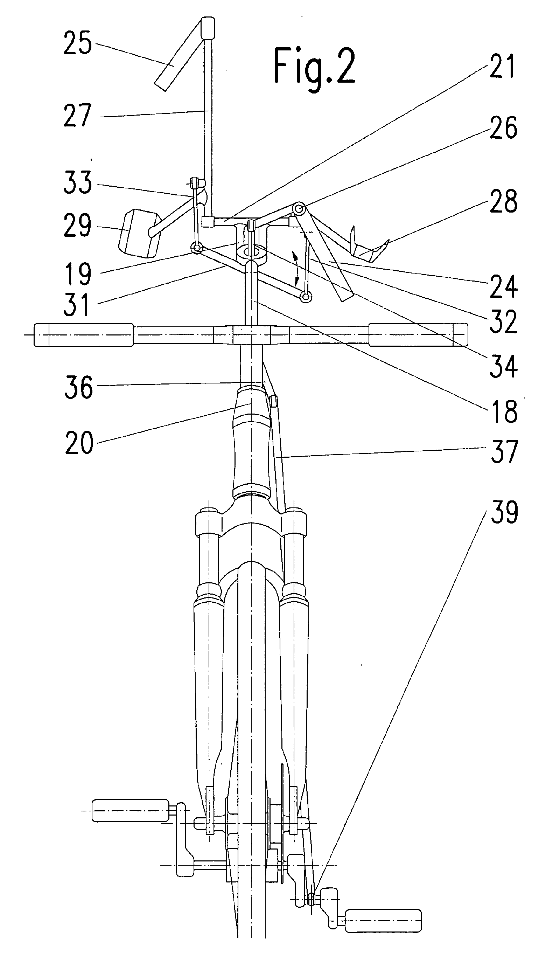

- Fig. 2: eine Vorderansicht des Fahrrades mit der erfindungsgemäßen armkraftbetätigten Antriebsvorrichtung gemäß der Fig. 1

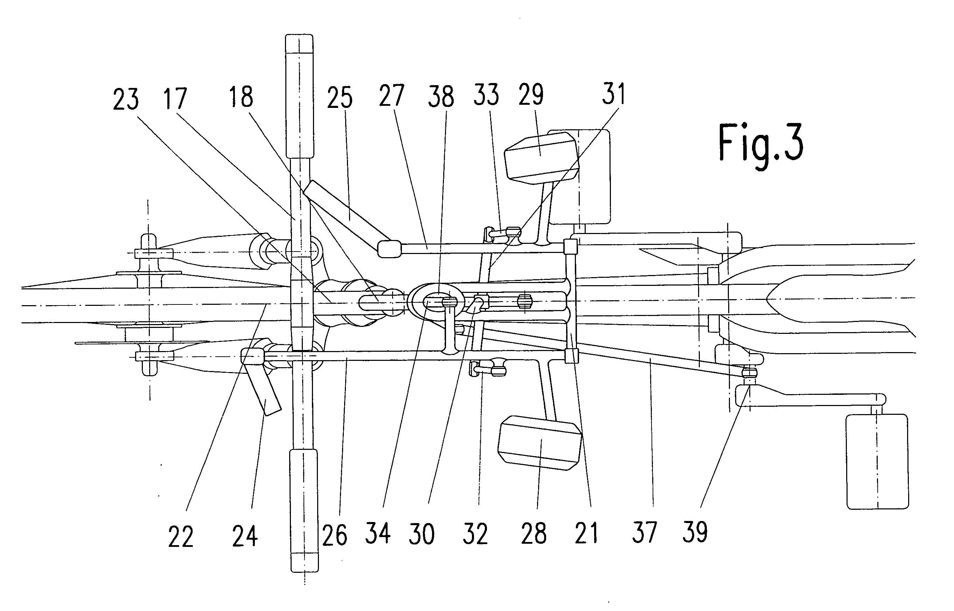

- Fig. 3: eine Draufsicht des Fahrrades mit der erfindungsgemäßen armkraftbetätigten Antriebsvorrichtung gemäß der Fig. 1
- Fig. 4: eine Seitenansicht der erfindungsgemäßen armkraftbetätigten Antriebsvorrichtung gemäß der Fig. 1 in einer Tretkurbelstellung von 0°
- Fig. 5: eine Seitenansicht der erfindungsgemäßen armkraftbetätigten Antriebsvorrichtung gemäß der Fig. 1 in einer Tretkurbelstellung von 90°
- Fig. 6: eine Seitenansicht der erfindungsgemäßen armkraftbetätigten Antriebsvorrichtung gemäß der Fig. 1 in einer Tretkurbeistellung von 180°
- Fig. 7: eine Seitenansicht der erfindungsgemäßen armkraftbetätigten Antriebsvorrichtung gemäß der Fig. 1 in einer Tretkurbelstellung von 270°

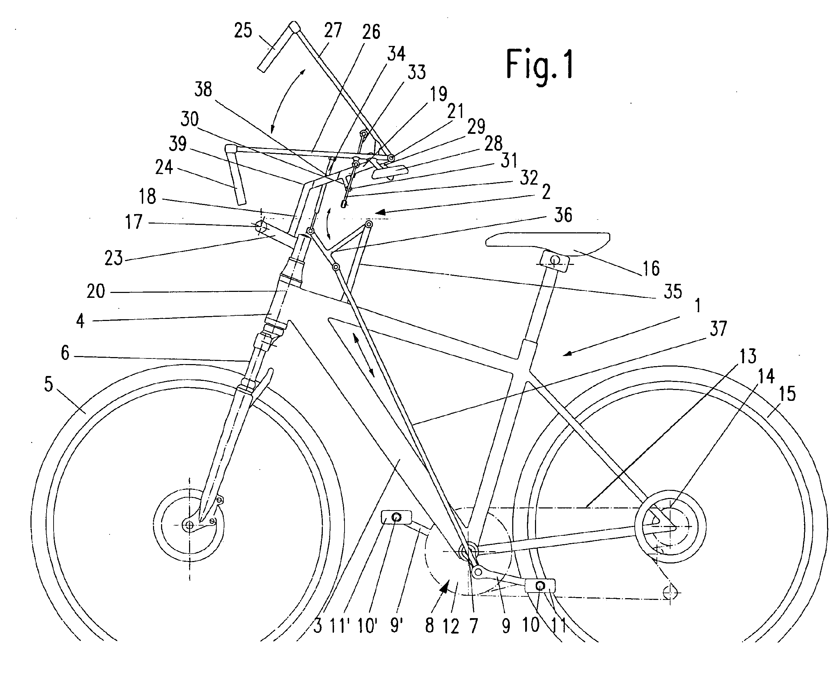

In der Fig. 1 ist ein Fahrrad 1 mit einer armkraftbetätigten Antriebsvorrichtung 2 dargestellt. Dieses Fahrrad 1 besteht aus einem Rahmen 3, an dem ein Lenkkopf 4 zur Aufnahme einer, ein Vorderrad 5 tragenden Gabel 6 und ein Tretlager 7 vorgesehen sind. Am Tretlager 7 ist ein Fußkurbelantrieb 8 gelagert, dessen Tretkurbeln 9, 9' mit je einer Achse 10, 10' zur drehbaren Lagerung von Pedalen 11, 11' ausgestattet sind. Außerdem beinhaltet der Fußkurbelantrieb 8 ein Kettenrad 12, welches über eine Kette 13 mit einem Antriebsritzel 14 in Wirkverbindung steht, das an einem im hinteren Teil des Rahmens 3 gelagerten Hinterrad 15 angeordnet ist. Für den Fahrer weist der Rahmen 3 weiterhin einen Sattel 16 und einen mit der im Lenkkopf 4 gelagerten Gabel 6 drehfest verbundenen Lenker 17 auf.

Die armkraftbetätigte Antriebsvorrichtung 2 besteht aus einem, am Lenker 17 angeordneten Träger 18, welcher auf dem Vorbau 23 des Lenkers 17 angeordnet ist. Dieser Träger 18 beinhaltet eine Abwinkelung 19, die die Achse 20 des Lenkkopfes 4 schneidet. Am freien Ende dieses Trägers 18 ist eine Achse 21 vorgesehen, die in Fahrtrichtung gesehen hinter dem Lenker 17 befindlich ist sowie quer zur Längsmittelebene 22 des Fahrrades 1 verläuft und auf der zwei gegenläufig schwenkbare, mit Handgriffen 24, 25 versehene und in Abstand zueinander gelagerte Armhebel 26, 27 angeordnet sind. Zur Abstützung für die Arme des Fahrers ist jeder dieser Armhebel 26, 27 mit einer Armstütze 28, 29 ausgestattet. Außerdem ist am Träger 18 ein Vorsprung 30 befindlich, welcher einen parallel zur Achse 21 des Trägers 18 verlaufenden Wipphebel 31 beweglich aufnimmt. An den freien Enden des Wipphebels 31 ist jeweils ein gelenkig gelagerter Stößel 32, 33 vorgesehen, über den eine gelenkige Verbindung zum Armhebel 26 bzw. Armhebel 27 hergestellt wird. Weiterhin ist am Armhebel 26 das eine Ende einer Gelenkstange 34 beweglich gelagert, deren anderes Ende an einem am Rahmen 3 angeordneten Umlenkfuß 35 gelenkig gehaltenen und im Wesentlichen T-förmig ausgestalteten Umlenkhebel 36 mit einem Pleuel 37 verbunden ist. Dabei erstreckt sich die Gelenkstange 34 durch eine im Träger 18 vorgesehene Öffnung 38, die beispielsweise kreisförmig oder oval ausgestaltet sein kann. Dadurch wird die Möglichkeit geschaffen, die Gelenkstange 34 koaxial zur Achse 20 des Lenkkopfes 4 positionieren zu können. An seinem den Rahmen 3 zugewandten Ende ist der Umlenkhebel 36 gelenkig mit dem Pleuel 37 verbunden, wobei das dem Fußkurbelantrieb 8 zugewandte Ende des Pleuels 37 auf einer an der Tretkurbel 9 vorgesehenen Abkröpfung 39 drehbar in seiner Lage festgelegt wird. Die Gelenkstange 34 ist axial verdrehbar ausgestaltet, wodurch sich die beim Lenken des Fahrrades zwangsweise vollziehende Verdrehung dieser Bauteile gegenüber dem Rahmen 3 ausgeglichen werden kann, so dass keine Beeinträchtigung der Lenkfunktion stattfindet.

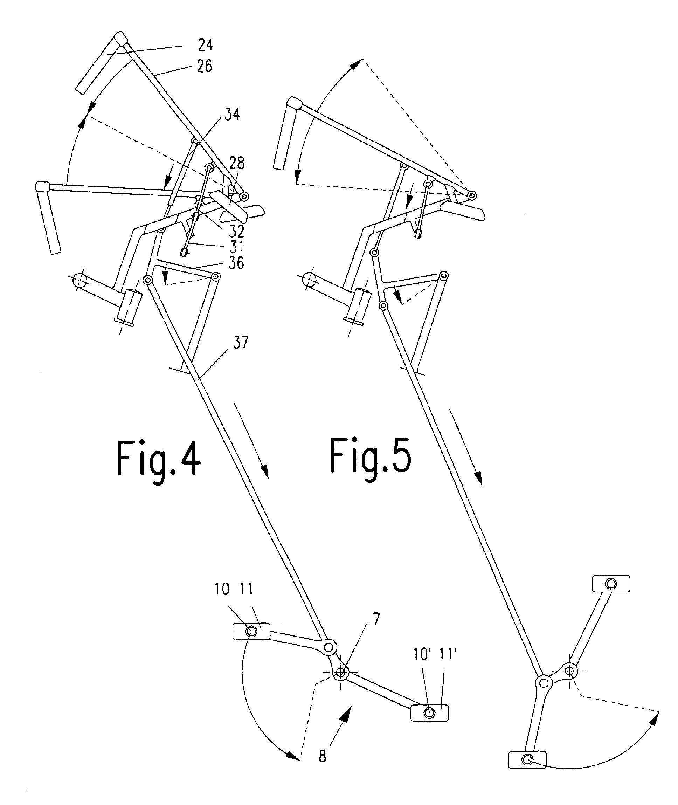

Die Funktionsweise der armkraftbetätigten Antriebsvorrichtung für ein Fahrrad soll nachfolgend anhand der Fig. 4 bis 7 beschrieben werden:

Werden vom Fahrer die Handgriffe 24, 25 erfasst, die Ellenbogen der Arme in den an den Armhebeln 26, 27 befindlichen Armstützen 28, 29 und die Füße auf den Pedalen 11, 11' des Fußkurbelantriebs 8 positioniert, so können nachfolgend für den Antrieb des Fahrrades 1 gleichzeitig zum üblichen Tritt der Beine auch die Arme abwechselnd gebeugt und gestreckt werden. Die dabei erfolgende Beanspruchung der Arme ist mit Bewegungsabläufen zu vergleichen, wie sie bei der Arbeit mit Hanteln auftreten. Dabei wird eine Kraftreserve nutzbar, die bei den meisten Fahrern in ausreichendem Umfang zur Verfügung steht.

Die in der Fig. 4 sichtbare Stellung der armkraftbetätigten Antriebsvorrichtung 2 kennzeichnet die Position des Fahrers wie folgt:
- Rechter Arm: gestreckt in Umkehrstellung
- Linker Arm: gebeugt in Umkehrstellung
- Beine: in Position mit maximalem Drehmoment am Fußkurbelantrieb 8
- Übertragungselemente: Gelenkstange 34, Umlenkhebel 36 und Pleuel 37 in oberer Umkehrstellung

Im sich anschließenden Bewegungsabschnitt verändern die Arme ihren Beugewinkel bis auf gleiche Höhe und bringen dort ihr maximales Drehmoment über die Übertragungselemente (Gelenkstange 34, Umlenkhebel 36 und Pleuel 37) bis in den Fußkurbelantrieb 8 ein. Die gegenläufige Bewegung der Arme wird stetig durch die Wirkverbindung der Armhebel 26, 27 über die Stößel 32, 33 und den Wipphebel 31 erreicht.

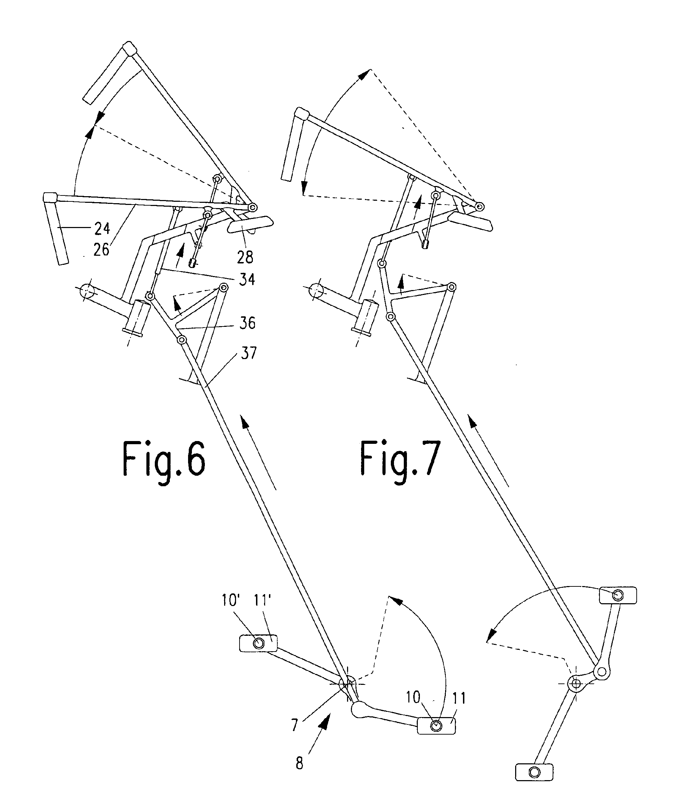

Die in der Fig. 5 gezeigte Stellung der armkraftbetätigten Antriebsvorrichtung 2 kennzeichnet die Position des Fahrers wie folgt:
- Rechter Arm: in Mittelstellung (maximales Drehmoment)
- Linker Arm: ebenfalls in Mittelstellung (maximales Drehmoment)
- Linkes Bein: in Position des unteren Totpunktes
- Rechtes Bein: in Position des oberen Totpunktes
- Übertragungselemente: Gelenkstange 34, Umlenkhebel 36 und Pleuel 37 sowie der Wipphebel 31 in Mittelstellung

Im nachfolgenden Bewegungsabschnitt trägt die Armkraft maximal dazu bei, die Totpunkte aus der Stellung der Beine zu überwinden. Dabei bewegen sich die Armhebel 26, 27 wieder in Richtung ihrer Umkehrstellungen.

Die in der Fig. 6 wiedergegebene Stellung der armkraftbetätigten Antriebsvorrichtung 2 kennzeichnet die Position des Fahrers folgendermaßen:
- Rechter Arm: gebeugt in Umkehrstellung
- Linker Arm: gestreckt in Umkehrstellung
- Beine: in Position mit maximalem Drehmoment am Fußkurbelantrieb 8
- Übertragungselemente: Gelenkstange 34, Umlenkhebel 36 und Pleuel 37 in unterer Umkehrstellung

Im folgenden Bewegungsabschnitt verändern die Arme ihren Beugungswinkel bis auf gleiche Höhe, jedoch gegenüber der in der Fig. 4 gezeigten Stellung seitenverkehrt. Weiterhin kennzeichnet die aus der Fig. 7 ersichtliche Stellung der armkraftbetätigten Antriebsvorrichtung 2 die Position des Fahrers wie folgt:
- Rechter Arm: in Mittelstellung (maximales Drehmoment)
- Linker Arm: ebenfalls in Mittelstellung (maximales Drehmoment)
- Linkes Bein: in Position des oberen Totpunktes
- Rechtes Bein: in Position des unteren Totpunktes
- Übertragungselemente: Gelenkstange 34, Umlenkhebel 36 und Pleuel 37 sowie der Wipphebel 31 in Mittelstellung

Im abschließenden Bewegungsabschnitt wird der Antriebszyklus beendet. Dabei hilft wiederum das über die Armkraft eingebrachte Moment, die soeben überwundenen Totpunkte der Beinkraft bis in eine Stellung der armkraftbetätigten Antriebsvorrichtung 2, wie in Fig. 4 gezeigt, zu bewegen.

Im Verlaufe eines Antriebszyklus wird somit ein ausgewogener Drehmomentenverlauf erreicht, der beste Voraussetzungen für einen "runden Tritt" schafft.
Durch die axial verdrehbare Gelenkstange 34 ist das Fahrrad 1 in jeder Stellung der armkraftbetätigten Antriebsvorrichtung 2 lenkbar.

### Bezugszeichenliste

- 1: Fahrrad
- 2: armkraftbetätigte Antriebsvorrichtung
- 3: Rahmen
- 4: Lenkkopf
- 5: Vorderrad
- 6: Gabel
- 7: Tretlager
- 8: Fußkurbelantrieb
- 9: Tretkurbel
- 9': Tretkurbel
- 10: Achse
- 10': Achse
- 11: Pedale
- 11': Pedale
- 12: Kettenrad
- 13: Kette
- 14: Antriebsritzel
- 15: Hinterrad
- 16: Sattel
- 17: Lenker
- 18: Träger
- 19: Abwinkelung
- 20: Achse
- 21: Achse
- 22: Längsmittelebene
- 23: Vorbau
- 24: Handgriff
- 25: Handgriff
- 26: Armhebel
- 27: Armhebel
- 28: Armstütze
- 29: Armstütze
- 30: Vorsprung
- 31: Wipphebel
- 32: Stößel
- 33: Stößel
- 34: Gelenkstange
- 35: Umlenkfuß
- 36: Umlenkhebel
- 37: Pleuel
- 38: Öffnung
- 39: Abkröpfung

## Patentansprüche

1. Fahrrad mit einem Lenker und einer zusätzlichen armkraftbetätigten Antriebsvorrichtung, die im wesentlichen aus zwei gegenläufig schwenkbaren, mit Handgriffen versehenen und auf einer quer zur Längsmittelebene des Fahrrades höhenmäßig über dem Lenker angeordneten Achse eines Trägers in Abstand zueinander gelagerten Armhebeln besteht, wobei die Armhebel über mindestens ein Pleuel mit mindestens einer Tretkurbel eines am Rahmen von einem Tretlager gehaltenen Fußkurbelantriebs in Wirkverbindung stehen,
**dadurch gekennzeichnet,**
**dass** der Träger (18) am Lenker (17) und die Achse (21) in Fahrtrichtung hinter dem Lenker (17) angeordnet sind.

2. Fahrrad mit einem Lenker und einer zusätzlichen armkraftbetätigten Antriebsvorrichtung nach Anspruch 1,
**dadurch gekennzeichnet,**
**dass** der Träger (18) auf dem Vorbau (23) des Lenkers (17) vorgesehen ist.

3. Fahrrad mit einem Lenker und einer zusätzlichen armkraftbetätigten Antriebsvorrichtung nach den Ansprüchen 1 und 2,
**dadurch gekennzeichnet,**
**dass** der Träger (18) eine Abwinkelung (19) aufweist.

4. Fahrrad mit einem Lenker und einer zusätzlichen armkraftbetätigten Antriebsvorrichtung nach Anspruch 3,
**dadurch gekennzeichnet,**
**dass** die Abwinkelung (19) die Achse (20) des Lenkkopfes (4) schneidend ausgestaltet ist.

5. Fahrrad mit einem Lenker und einer zusätzlichen armkraftbetätigten Antriebsvorrichtung nach Anspruch 1,
**dadurch gekennzeichnet,**
**dass** am Träger (18) ein Wipphebel (31) angeordnet ist, dessen freie Enden jeweils einen die gelenkige Verbindung zum Armhebel (26) bzw. Armhebel (27) herstellenden Stößel (32, 33) beinhalten, wobei der Armhebel (26) gelenkig über eine Gelenkstange (34) und einen, an einem am Rahmen (3) vorgesehenen Umlenkfuß (35) gelenkig gehaltenen Umlenkhebel (36) mit dem Pleuel (37) verbunden ist.

6. Fahrrad mit einem Lenker und einer zusätzlichen armkraftbetätigten Antriebsvorrichtung nach Anspruch 1,
**dadurch gekennzeichnet,**
**dass** die Armhebel (26, 27) über den Pleuel (37) ihr maximales Drehmoment in einem Drehwinkel an den Fußkurbelantrieb (8) abgeben, in dem von den Pedalen (11, 11') des Fußkurbelantrieb (8), aufgrund eines Totpunktdurchganges, selbst kein Drehmoment erzeugbar ist.

7. Fahrrad mit einem Lenker und einer zusätzlichen armkraftbetätigten Antriebsvorrichtung nach Anspruch 5,
**dadurch gekennzeichnet,**
**dass** die Armhebel (26, 27) wechselweise dem Bewegungsablauf (Strecken und Beugen) der Unterarme des Radfahrers folgen und dabei die Unterarmgelenke, in den Armstützen (28, 29) liegend, die Achse (21) schneiden.

8. Fahrrad mit einem Lenker und einer zusätzlichen armkraftbetätigten Antriebsvorrichtung nach Anspruch 5,
**dadurch gekennzeichnet,**
**dass** die Gelenkstange (34) axial verdrehbar ausgestaltet sind.

9. Fahrrad mit einem Lenker und einer zusätzlichen armkraftbetätigten Antriebsvorrichtung nach Anspruch 5,
**dadurch gekennzeichnet,**
**dass** der Umlenkhebel (36) T-förmig ausgestaltet ist.

10. Fahrrad mit einem Lenker und einer zusätzlichen armkraftbetätigten Antriebsvorrichtung nach Anspruch 5,
**dadurch gekennzeichnet,**
**dass** der Träger (18) eine Öffnung (38) für die Durchführung der Gelenkstange (34) beinhaltet.

11. Fahrrad mit einem Lenker und einer zusätzlichen armkraftbetätigten Antriebsvorrichtung nach Anspruch 10,
**dadurch gekennzeichnet,**
**dass** die Öffnung (38) kreisförmig oder oval ausgestaltet ist.

12. Fahrrad mit einem Lenker und einer zusätzlichen armkraftbetätigten Antriebsvorrichtung nach Anspruch 5,
**dadurch gekennzeichnet,**
**dass** der Wipphebel (31) an einem am Träger (18) angeordneten Vorsprung (30) vorgesehen ist.

13. Fahrrad mit einem Lenker und einer zusätzlichen armkraftbetätigten Antriebsvorrichtung nach Anspruch 5,
**dadurch gekennzeichnet,**
**dass** die Gelenkstange (34) koaxial zur Achse (20) des Lenkkopfes (4) angeordnet ist.

14. Fahrrad mit einem Lenker und einer zusätzlichen armkraftbetätigten Antriebsvorrichtung nach Anspruch 5,
**dadurch gekennzeichnet,**
**dass** der Pleuel (37) mit einer an der Tretkurbel (9) vorgesehenen Abkröpfung (39) verbunden ist.
